**Europäisches Patentamt**

**European Patent Office**

**Office européen des brevets**

(19)

(11) Veröffentlichungsnummer: **0 004 063**
**B1**

(12) # EUROPÄISCHE PATENTSCHRIFT

(45) Veröffentlichungstag der Patentschrift:
**15.07.81**

(51) Int. Cl.³: **B 23 K 20/04,** B 23 K 20/18

(21) Anmeldenummer: **79100665.3**

(22) Anmeldetag: **06.03.79**

(54) **Verfahren zum Herstellen von plattierten Blechen.**

(30) Priorität: **14.03.78 AT 1806/78**

(43) Veröffentlichungstag der Anmeldung:
**19.09.79 Patentblatt 79/19**

(45) Bekanntmachung des Hinweises auf die Patenterteilung:
**15.07.81 Patentblatt 81/28**

(84) Benannte Vertragsstaaten:
**DE FR GB SE**

(56) Entgegenhaltungen:
**FR-A-2 210 513**
**GB-A-759 114**
**GB-A-759 413**
**US-A-2 438 759**
**US-A-2 704 883**
**US-A-3 547 599**

(73) Patentinhaber: **VOEST-ALPINE Aktiengesellschaft,
Werksgelände, A-4010 Linz (AT)**

(72) Erfinder: **Veitl, Giswalt, Dipl.-Ing. Dr.mont.,
Ziegeleistrasse 16, A-4020 Linz (AT)**

(74) Vertreter: **Glawe, Richard, Dr. et al, Postfach 37,
D-8000 München 26 (DE)**

## Verfahren zum Herstellen von plattierten Blechen

Die Erfindung betrifft ein Verfahren zum Herstellen von plattierten Blechen, insbesondere von 100 bis 300 mm dicken plattierten Blechen, durch Walzschweissplattieren eines evakuierten sandwichartig aus Grund- und Auflagewerkstoff gebildeten, ein- oder zweiseitigen Plattierpaketes, wobei das Plattierpaket rundum von einem Schweissrahmen abgedichtet wird und die Grundwerkstoffplatte(n) und die Auflagewerkstoffplatte(n) an den miteinander zur Anlage gelangenden Seiten spanabhebend, vorzugsweise durch Hobeln oder Bandschleifen planbearbeitet werden. Ein Verfahren dieser Art ist aus der FR-PS 2 210 513 bekannt.

Als einseitiges Plattierpaket wird ein aus einer Grundwerkstoffplatte, einer an dieser anliegenden metallischen Auflagewerkstoffplatte und einer durch ein schweisshinderndes Mittel von der Auflagewerkstoffplatte getrennten metallischen Deckplatte gebildetes Plattierpaket und als zweiseitiges Plattierpaket ein aus zwei Grundwerkstoffplatten und zwischen diesen liegenden, durch ein schweisshinderndes Mittel getrennten metallischen Auflagewerkstoffplatten gebildetes Paket verstanden, wobei das einseitige Plattierpaket durch einen mit der Grundwerkstoffplatte und der Deckplatte verschweissten Schweissrahmen und das zweiseitige Plattierpaket durch einen mit den Grundwerkstoffplatten rundum verschweissten Schweissrahmen abgedichtet ist.

Im Stahlbau, insbesondere für den Bau von Kernkraftwerken, benötigt man in zunehmendem Mass plattierte Grobbleche in Blechdicken über 100 mm bis zu 300 mm. Die Herstellung solch dicker plattierter Bleche bereitete bisher grosse Schwierigkeiten.

Bisher war es erforderlich, zur einwandfreien Bindung des Auflagewerkstoffes mit dem Grundwerkstoff Verformungsgrade von über 50%, die nur in einer Vielzahl von Walzstichen erreicht werden können, anzuwenden. Unter Verformungsgrad wird das Verhältnis von Stichabnahme (Dickenminderung) zu Anfangsdicke des Walzgutes verstanden, wobei mehrere Stiche angewendet werden können. Durch diese Dickenreduzierung des Plattierpaketes war es in der Praxis bisher nur mit einem grossen Aufwand möglich, einwandfrei plattierte Bleche in über 100 mm Dikke herzustelen. Bei der Erzeugung von plattierten Blechen in Dicken über 150 mm kam es infolge des bisher notwendigen hohen Verformungsgrades beim Walzschweissplattieren des Plattierpaketes und der sich daraus ergebenden grossen Anfangsdicke des Plattierpaketes zu unüberwindbaren Schwierigkeiten. Man war daher gezwungen, andere Verfahren anzuwenden, wie z.B. das Sprengplattieren, bei welchen Verfahren jedoch hinsichtlich der erzielbaren Blechgrösse enge Grenzen gesetzt sind.

Die Erfindung stellt sich die Aufgabe, ein Verfahren der eingangs beschriebenen Art zum Herstellen von plattierten Blechen zu schaffen, durch welches es möglich ist, mit nur geringen Verformungsgraden, die in nur einigen wenigen Walzstichen aufgebracht werden können, das Auslangen zu finden, wobei jedoch eine einwandfreie Walzschweissverbindung der Auflagewerkstoffplatte mit der Grundwerkstoffplatte sichergestellt ist.

Diese Aufgabe wird durch die Kombination folgender Massnahmen gelöst:
- dadurch, dass vor dem Verschweissen des Plattierpaketes ein die Auflagewerkstoffplatte(n) peripher umgebender Hilfsrahmen mit etwa einer die Höhe der übereinanderliegenden Auflagewerkstoffplatten beim zweiseitigen Plattierpaket bzw. der Auflagewerkstoffplatte beim einseitigen Plattierpaket aufweisenden Höhe eingesetzt wird,
- dadurch, dass zwischen dem Schweissrahmen und dem Hilfsrahmen ein Luftspalt freigelassen wird, und
- dadurch, dass das Walzschweissen unter Anwendung eines Gesamtverformungsgrades von weniger als 50%, vorzugsweise weniger als 30% in maximal 5 Walzstichen durchgeführt wird.

Durch die Massnahme, einen Hilfsrahmen der beschriebenen Art zu verwenden und den Hilfsrahmen unter Freilassung eines Luftspaltes gegenüber dem Schweissrahmen in das Plattierpaket einzusetzen, wird erreicht, dass Metalloxyde, wie sie beim Verschweissen des Paketes entstehen, nicht bis zur Auflagewerkstoffplatte gelangen, wodurch ein Einwandern des Sauerstoffes zu den Auflagewerkstoffplatten verhindert wird. Der Hilfsrahmen bleibt im Gegensatz zum Schweissrahmen frei von durch die Wärmeeinwirkung beim Schweissen entstehenden Anlauffarben.

Der Hilfsrahmen bewirkt weiters eine Versteifung des Paketes, so dass der beim Walzschweissplattieren gefürchtete Aufschlüsselungs- bzw. Krümmungseffekt weniger leicht auftritt. Durch das Aufschlüsseln des plattierten Bleches reisst in der Regel die Schweissverbindung des Schweissrahmens mit der Grundwerkstoffplatte und/oder der Deckplatte ein, wodurch es zum Eindringen von Luft in das Plattierpaket, wenn dieses nach herkömmlicher Art zusammengestellt ist, kommt. Beim erfindungsgemässen Plattierpaket wird selbst bei einem Undichtwerden der Schweissverbindung das Eindringen von Luft zur Auflagewerkstoffplatte verhindert, da der Hilfsrahmen an der Grundwerkstoffplatte bzw. dem Deckblech eine zusätzliche Abdichtung bewirkt.

Bei kombinierter Anwendung der erfindungsgemässen Massnahmen ist es möglich, schon mit Verformungsgraden von 10% eine lückenlose Bindung zwischen der Auflagewerkstoffplatte und der Grundwerkstoffplatte zu erreichen. Dadurch ist es beispielsweise möglich, aus einer 330 mm dicken Vorbramme ein plattiertes Blech mit einer Grundwerkstoffdicke von 300 mm Dicke herzustellen.

Verwendet man als Grundwerkstoff im Blockguss oder im Stranggiessverfahren erschmolzene Brammen, so ist es erforderlich, diese mit einem Verformungsgrad von mindestens 67% zu walzen, damit die mechanischen Eigenschaften des Grundwerkstoffes den gestellten Anforderungen entsprechen und auch die Ultraschallprüfung ein befriedigendes Ergebnis ergibt. Um nach dem Blockgiess- oder nach dem Stranggiessverfahren hergestellte Grundwerkstoffplatten für das erfindungsgemässe Verfahren verwenden zu können, ist es somit notwendig, diese einer Verformung mit hohem Verformungsgrad vor dem Zusammenbau des Plattierpaketes zu unterwerfen, da das Plattierpaket selbst nur mehr einer Verformung mit sehr geringem Verformungsgrad unterzogen wird. Die dem Paketbau vorausgehende Verformung kann in einer Ausgestaltung des erfindungsgemässen Verfahrens dadurch vermieden werden, dass als Grundwerkstoff nach dem Elektroschlackeumschmelzverfahren (ESU-Verfahren) oder nach dem Böhler-Electro-Slag-Topping-Verfahren (B.E.S.T.-Verfahren) erschmolzene Platten verwendet werden. Eine Erläuterung und Beschreibung des ESU-Verfahrens ist in der Zeitschrift «Stahl u. Eisen» 88 (1968) Nr. 12, Seiten 638 bis 648, eine Erläuterung des B.E.S.T.-Verfahrens ist in der AT-PS 282 845 bzw. GB-PS 1 254 546 dargelegt. Durch die Verwendung von nach dem Elektroschlackeumschmelzverfahren (ESU-Verfahren) oder nach dem Böhler-Electro-Slag-Topping-Verfahren (B.E.S.T.-Verfahren) erschmolzenen Platten erübrigt sich infolge der bei diesem Verfahren erzielbaren Homogenität und Reinheit (Einschlussfreiheit) die Anwendung eines starken Verformungsgrades für den Grundwerkstoff. Die Verwendung dieser bereits ohne Walzvorgang «ultraschallreinen» Werkstoffe für die Grundwerkstoffplatten bietet gegenüber den nach dem herkömmlichen Blockgiessverfahren erschmolzenen Werkstoffen weiters den Vorteil, dass bei der üblich vorgesehenen hundertprozentigen Ultraschallprüfung der fertig plattierten Bleche vom Grundwerkstoff verursachte Fehleranzeigen nicht auftreten, was bei Grundwerkstoffen, die nach herkömmlichen Blockgussverfahren hergestellt wurden, nie ganz auszuschliessen ist, wodurch bei Verwendung letzterer Grundwerkstoffe ein Erkennen eines Bindefehlers erheblich erschwert, wenn nicht gar unmöglich gemacht wird.

Es ist von Vorteil, wenn der Hilfsrahmen allseits metallisch blank bearbeitet und an seiner (seinen) zur (zu den) Grundwerkstoffplatte(n) gerichteten Seite(n) spanabhebend planbearbeitet wird.

Um mit besonders niedrigen Verformungsgraden das Auslangen zu finden, ist zweckmässig die planbearbeitete Fläche der Grundwerkstoffplatte mit einer maximal zulässigen Unebenheitsabweichung von 1% der Dicke der Grundwerkstoffplatte und die planbearbeitete Fläche der Auflagewerkstoffplatte und die des Hilfsrahmens mit einer maximalen Unebenheitsabweichung von 1 mm hergestellt.

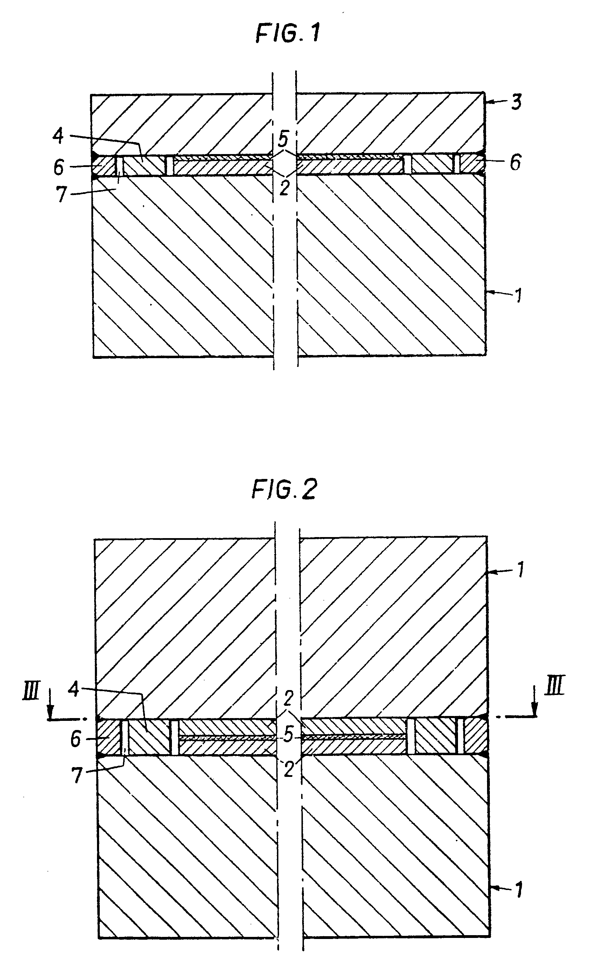

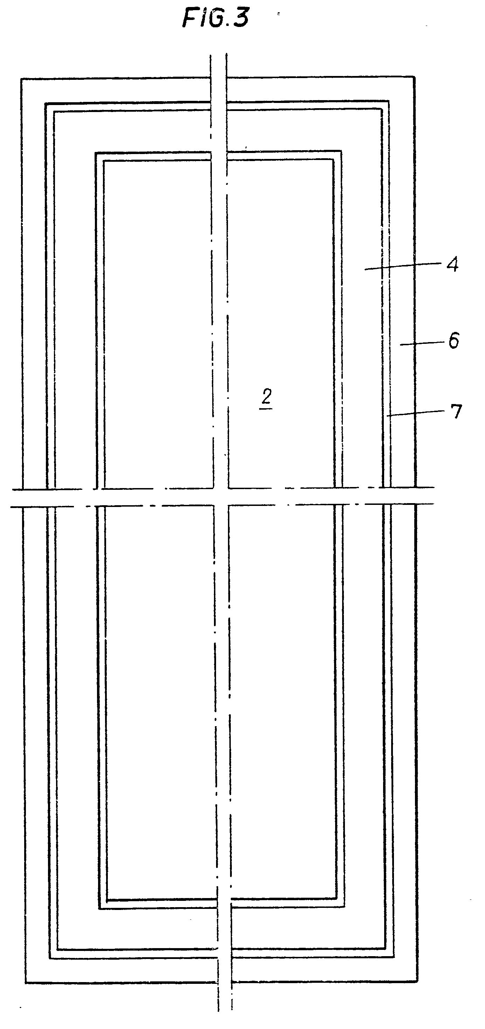

Das erfindungsgemässe Verfahren ist nachfolgend anhand eines Beispieles sowie anhand der Zeichnung näher erläutert. Fig. 1 zeigt ein einseitiges und Fig. 2 ein zweiseitiges Plattierpaket im Schnitt. Fig. 3 stellt einen nach der Linie III–III der Fig. 2 geführten Schnitt dar.

Beispiel: Es sollte ein plattiertes Blech hergestellt werden, dessen Grundwerkstoff aus einem Kohlenstoffstahl der Qualität H II nach der Norm DIN 17155 besteht. Als Auflagewerkstoff war ein Chrom-Nickel-Stahl der Qualität X 10 Cr Ni Nb 18 9 vorgesehen (DIN 17440).

Die geforderten Abmessungen des fertig-plattierten Bleches betrugen $3200 \times 1400 \times 270 \times 3,5$ mm, wobei 270 mm die geforderte Dicke des Grundwerkstoffes und 13,5 mm die geforderte Dicke des Auflagewerkstoffes waren.

Da nur ein einzelnes Blech hergestellt werden sollte, wurde ein einseitiges Plattierpaket gebildet, wobei für das Deckblech ein Blech in der Dicke von 60 mm verwendet wurde, welches aus einem vakuumbehandelten, unberuhigten Stahl mit folgender chemischer Zusammensetzung gewalzt wurde: 0,006% C, 0,50% Mn, 0,001% P, 0,001% S, Rest Eisen mit erschmelzungsbedingten Verunreinigungen. Als Ausgangsmaterial für die Grundwerkstoffplatte wurde eine nach dem Elektroschlackeumschmelzverfahren (ESU-Verfahren) hergestellte Vorbramme mit den Abmessungen $2800 \times 1600 \times 350$ mm vorgesehen. Diese Vorbramme wurde zunächst, um ein eckiges Format zu erzielen, auf das Format $3260 \times 1600 \times 300$ mm ausgewalzt. Danach wurde die Vorbramme geschopft und einer Ultraschallprüfung unterzogen. Eine Seite der Vorbramme wurde plangeschliffen, wobei insbesondere darauf geachtet wurde, dass Schleifgruben vermieden wurden. Als maximale Abweichung der plangeschliffenen Oberfläche von der geometrisch exakten Planheit wurden 3 mm, das ist 1% der Dicke der Grundwerkstoffplatte, festgelegt.

Parallel zu diesen Vorgängen wurde die Auflagewerkstoffplatte gewalzt und zugeschnitten, wobei die so vorbereitete Auflagewerkstoffplatte etwa die Abmessungen $3020 \times 1480 \times 16$ mm aufwies. Anschliessend wurde die Auflagewerkstoffplatte an einer Seite ebenfalls plangeschliffen, wobei ebenfalls auf die Vermeidung von Schleifgruben geachtet und eine maximale Abweichung von der geometrisch ebenen Fläche mit 1 mm festgelegt wurde. Das Deckblech wies nach dem Walzen und Zuschneiden etwa die Abmessungen $3600 \times 650 \times 60$ mm auf.

Ein Hilfsrahmen, dessen Innenabmessungen um ein geringes grösser bemessen wurden als die Länge und Breite der Auflagewerkstoffplatte, wurde mit der Breite von 30 mm und mit einer Höhe von 15 mm in schweissbarer Stahlqualität mit etwa 0,1% C hergestellt und allseits blank bearbeitet, wobei die beiden Planseiten des Hilfsrahmens plangeschliffen wurden, und zwar mit einer maximalen Unebenheitsabweichung von 1 mm.

Aus der Grundwerkstoffplatte 1, der Auflagewerkstoffplatte 2, dem Deckblech 3 und dem Hilfsrahmen 4 wurde ein Plattierpaket zusammengefügt, wie es in Fig. 1 dargestellt ist. Zwischen der Deckplatte und der Auflagewerkstoffplatte wurde ein schweisshinderndes Mittel 5 vorgesehen. Ein Schweissrahmen 6 wurde zwischen der Deckplatte 3 und der Grundwerkstoffplatte 1 unter Freilassung eines Luftspaltes 7 zum Hiflsrahmen 4 eingefügt und mit der Grundwerkstoffplatte 1 sowie dem Deckblech dicht verschweisst.

Das so fertiggestellte Paket wurde durch eine nicht dargestellte Entlüftungsöffnung evakuiert, worauf die Öffnung geschlossen wurde. Sodann wurde das Plattierpaket auf Walztemperatur erhitzt und in nur zwei Stichen auf eine Rohtafel mit etwa den Abmessungen 3500×1600×338 mm gewalzt. Der Verformungsgrad betrug dabei etwa 10%. Nach dem Aufschneiden des Paketes, Entfernen des Deckbleches und Beschneiden der Ränder lag das fertigplattierte Blech in den gewünschten Abmessungen vor.

Das plattierte Blech wurde ultrageschallt. Es konnten keine Fehlstellen der Bindung zwischen Auflage- und Grundwerkstoffplatte gefunden werden.

In Fig. 2 ist ein zweiseitiges Plattierpaket gezeigt, welches analog zu dem einseitigen Plattierpaket hergestellt ist. Anstelle des Deckbleches ist hier eine zweite Grundwerkstoffplatte 1 vorgesehen. Der Hilfsrahmen 4 weist eine Höhe auf, die etwa der Höhe der beiden zwischen den Grundwerkstoffplatten 1 eingesetzten Auflagewerkstoffplatten 2, welche durch ein schweisshinderndes Mittel 5 voneinander getrennt sind, entspricht. Die Schweissleiste 6 ist ebenfalls unter Freilassung eines Luftspaltes 7 zwischen ihr und dem Hilfsrahmen 4 angeordnet.

Arbeitet man nach dem erfindungsgemässen Verfahren, so tritt vollständiges Verschweissen der Grundwerkstoffplatte mit der Auflagewerkstoffplatte schon bei einem Gesamtverformungsgrad von etwa 10% ein, d.h. dass das Walzschweissen nach Anwendung eines Verformungsgrades von etwa 10% bereits beendet ist. Es ist jedoch möglich, das Paket weiter auf eine geringere Dicke zu verwalzen, und zwar entweder in gleicher Walzhitze oder unter separater Aufwärmung. Auch kann ein Weiterwalzen des nach Trennen des Plattierpaketes vorliegenden plattierten Bleches an das erfindungsgemässe Verfahren angeschlossen werden.

## Patentansprüche

1. Verfahren zum Herstellen von plattierten Blechen, insbesondere von 100 bis 300 mm dicken plattierten Blechen, durch Walzschweissplattieren eines evakuierten sandwichartig aus Grund- und Auflagewerkstoff gebildeten, ein- oder zweiseitigen Plattierpaketes, wobei das Plattierpaket rundum von einem Schweissrahmen (6) abgedichtet wird und die Grundwerkstoffplatte(n) (1) und die Auflagewerkstoffplatte(n) (2) an den miteinander zur Anlage gelangenden Seiten spanabhebend, vorzugsweise durch Hobeln oder Bandschleifen planbearbeitet werden, gekennzeichnet durch die Kombination der Massnahmen:

- dass vor dem Verschweissen des Plattierpaketes ein die Auflagewerkstoffplatte(n) (2) peripher umgebender Hilfsrahmen (4) mit etwa einer die Höhe der übereinanderliegenden Auflagewerkstoffplatten (2) beim zweiseitigen Plattierpaket bzw. der Auflagewerkstoffplatte (2) beim einseitigen Plattierpaket aufweisenden Höhe eingesetzt wird,
- dass zwischen dem Schweissrahmen (6) und dem Hilfsrahmen (4) ein Luftspalt (7) freigelassen wird, und
- dass das Walzschweissen unter Anwendung eines Gesamtverformungsgrades von weniger als 50%, vorzugsweise weniger als 30% in maximal 5 Walzstichen durchgeführt wird.

2. Verfahren nach Anspruch 1, dadurch gekennzeichnet, dass als Grundwerkstoff nach dem Elektroschlackeumschmelzverfahren (ESU-Verfahren) oder nach dem Böhler-Electro-Slag-Topping-Verfahren (B.E.S.T.-Verfahren) erschmolzene Platten verwendet werden.

3. Verfahren nach Anspruch 1 oder 2, dadurch gekennzeichnet, dass der Hilfsrahmen (4) allseits metallisch blank bearbeitet und an seiner (seinen) zur (zu den) Grundwerkstoffplatte(n) (1) gerichteten Seite(n) spanabhebend planbearbeitet wird.

4. Verfahren nach den Ansprüchen 1 bis 3, dadurch gekennzeichnet, dass die planbearbeitete Fläche der Grundwerkstoffplatte (1) mit einer maximal zulässigen Unebenheitsabweichung von 1% der Dicke der Grundwerkstoffplatte (1) und die planbearbeitete Fläche der Auflagewerkstoffplatte (2) und die des Hilfsrahmens (4) mit einer maximalen Unebenheitsabweichung von 1 mm hergestellt ist.

## Claims

1. Process for producing clad plate or sheet, in particular clad plate having a thickness of 100 to 300 mm, by roll-bond cladding an evacuated one-side or two-side cladding package formed by a base material and a cladding material in a sandwich-like manner, the cladding package being sealed on all sides by a welding frame (6) and the base-material plate(s) (1) and the cladding-material plate(s) (2), on the sides getting into contact with each other, being machined, preferably plane-machined by planing or belt-grinding, characterised by the combination of the following measures:
- that prior to the welding of the cladding package an auxiliary frame (4) peripherally surrounding the cladding-material plate(s) (2) is used which has a height that corresponds approximately to the height of the superposed cladding-material plates (2) in case of the two-side cladding package or to the cladding-material plate (2) in case of the one-side cladding package,
- that an air gap (7) is kept free between the welding frame (6) and the auxiliary frame (4), and
- that the roll-bonding step is carried out by applying a total-deformation degree of less than 50%, preferably of less than 30%, in five rolling passes at the most.

2. Method according to claim 1, characterised in that as the base material plates molten according to the electroslag-remelting process (ESR-process) or according to the Böhler electroslag-topping process (B.E.S.T.-process) are used.

3. Method according to claim 1 or 2, characterised in that the auxiliary frame (4) on all sides is machined metallically bright and on its side(s) directed to the base-material plate(s) (1) is plane-machined.

4. Method according to claims 1 to 3, characterised in that the plane-machined surface of the base-material plate (1) has been produced with a maximally permissible deviation from planeness of 1% of the thickness of the base-material plate (1) and the plane-machined surface of the cladding-material plate (2) and that of the auxiliary frame (4) has been produced with a maximal deviation from planeness of 1 mm.

## Revendications

1. Procédé de fabrication de tôles plaquées, en particulier de tôles plaquées de 100 à 300 mm d'épaisseur, utilisant le placage par laminage d'un paquet de placage unilatéral ou bilatéral en forme de sandwich, vide d'air, formé d'un matériau de base et d'un matériau de revêtement, le paquet de placage étant rendu étanche tout autour par un cadre de soudage (6) et la ou les plaques de matériau de base (1) ainsi que la ou les plaques de matériau de revêtement (2) étant aplanies par usinage à leurs faces qui s'appliquent les unes contre les autres, de préférence par rabotage ou à la bande abrasive, procédé caractérisé par la combinaison des mesures suivantes:
- avant de souder le paquet de placage, on insère un cadre auxiliaire (4) entourant périphériquement la ou les plaques de matériau de revêtement (2) et dont la hauteur correspond à peu près à la hauteur des plaques de matériau de revêtement superposées (2) dans le cas du paquet de placage bilatéral ou à la hauteur de la plaque de matériau de revêtement (2) dans le cas du placage unilatéral,
- on ménage un interstice d'air (7) entre le cadre de soudage (6) et le cadre auxiliaire (4),
- on exécute le placage par laminage en appliquant un taux de déformation global inférieur à 50%, de préférence inférieur à 30% en 5 passes de laminage au maximum.

2. Procédé selon la revendication 1, caractérisé par le fait que l'on utilise comme matériau de base des plaques fondues par le procédé de refusion sous laitier électroconducteur ou par le procédé Böhler.

3. Procédé selon l'une des revendications 1 et 2, caractérisé par le fait que l'on usine le cadre auxiliaire (4) de tous côtés jusqu'au métal nu et qu'on l'aplanit par usinage à son ou ses côtés tournés vers la ou les plaques de matériau de base (1).

4. Procédé selon les revendications 1 à 3, caractérisé par le fait que la surface aplanie par usinage de la plaque de matériau de base (1) est réalisée avec un écart maximal de planéité permis représentant 1% de l'épaisseur de la plaque de matériau de base (1) et que la surface aplanie par usinage de la plaque de matériau de revêtement (2) et celle du cadre auxiliaire (4) sont réalisées avec un écart maximal de planéité de 1 mm.

*FIG. 1*

*FIG. 2*

## FIG.3

4

6

7

2